# EUROPÄISCHE PATENTSCHRIFT

(11) **EP 4 004 314 B1**
(45) Veröffentlichungstag und Bekanntmachung des Hinweises auf die Patenterteilung: **01.11.2023**
(21) Anmeldenummer: 20754156.6
(22) Anmeldetag: 23.07.2020
(51) Int. Cl.: E05B 81/06, E05B 81/20, E05B 81/34, E05B 81/42, F16H 25/12, F16H 25/18

(54) **ANTRIEBSEINHEIT FÜR KRAFTFAHRZEUGTECHNISCHE ANWENDUNGEN**
DRIVE UNIT FOR MOTOR-VEHICLE APPLICATIONS
UNITÉ D'ENTRAÎNEMENT CONÇUE POUR DES UTILISATIONS TECHNIQUES DANS LE DOMAINE DES VÉHICULES AUTOMOBILES

(30) Priorität: 23.07.2019 DE 102019119876
(43) Veröffentlichungstag der Anmeldung: 01.06.2022
(73) Patentinhaber: Kiekert AG, 42579 Heiligenhaus (DE)
(72) Erfinder: SCHIFFER, Holger, 40668 Meerbusch (DE); SCHOLZ, Michael, 45136 Essen (DE); INAN, Ömer, 46282 Dorsten (DE); SZEGENY, Peter, 51766 Engelskirchen (DE)
(86) Internationale Anmeldenummer: PCT/DE2020/100649
(87) Internationale Veröffentlichungsnummer: WO 2021/013309

(56) Entgegenhaltungen:
- EP-A1- 2 163 715
- DE-A1- 10 319 952

## Beschreibung

Die Erfindung betrifft eine Antriebseinheit für kraftfahrzeugtechnische Anwendungen, mit einem elektromotorischen Antrieb, und mit einer an einem Ende an dem Antrieb gelagerten und von ihm beaufschlagten Betätigungsstange, wobei der Antrieb exzentrisch auf die Betätigungsstange arbeitet und dazu ein Antriebsnocken des Antriebes in eine Antriebsausnehmung der Betätigungsstange eingreift, wobei zusätzlich zu dem in die Antriebsausnehmung der Betätigungsstange eingreifenden Antriebsnocken des Antriebs ein an den Antrieb angeschlossenes Führungsmittel vorgesehen ist, welches mit einem Gegenführungsmittel an der Betätigungsstange zu ihrer Führung wechselwirkt.

Antriebseinheiten für kraftfahrzeugtechnische Anwendungen werden für vielfältige Einsatzzwecke genutzt. Hierzu gehören beispielsweise und nicht einschränkend Schließ- und/oder Öffnungseinrichtungen, wie sie in der gattungsbildenden WO 2015/024555 A1 im Detail beschrieben werden. Mit Hilfe einer solchen Schließeinrichtung kann eine Fahrzeugklappe, eine Kraftfahrzeugseitentür, eine Motorhaube etc. beispielsweise von einer Vorschließstellung in eine Hauptschließstellung gegen die Kraft einer umlaufenden Türgummidichtung zugezogen werden. Auch lässt sich mit Hilfe einer solchen Antriebseinheit generell eine öffnungseinrichtung zum Offnen einer solchen Klappe, Haube oder Seitentür realisieren.

Zu diesem Zweck arbeitet bei der bekannten und gattungsbildenden Lehre der elektromotorische Antrieb exzentrisch auf die fragliche Schließ- und/oder Öffnungseinrichtung. Diese setzt sich im Wesentlichen aus einer Schwinge und einer an einem Schlossgehäuse angreifenden Klinke zusammen. Die Schwinge ist mit einem Langloch zum Eingriff eines Betätigungszapfens ausgerüstet, um die gewünschte exzentrische Lagerung der bekannten Betätigungsstange an dem Antrieb zu realisieren und umzusetzen. Dazu vollführt der fragliche Betätigungszapfen innerhalb des Langloches vom Antrieb initiierte Kreisbewegungen, um die Schwinge und mit ihr das zuvor bereits angesprochene Schlossgehäuse zu verschwenken. Das hat sich grundsätzlich bewährt. Allerdings benötigt die fragliche Schwinge eine zusätzliche Führung und ist ergänzend noch mit einer Feder bzw. Spiralfeder ausgerüstet.

Ein anderer Anwendungsfall für Antriebseinheiten im Zusammenhang mit kraftfahrzeugtechnischen Anwendungen wird in der DE 197 37 996 A1 vorgestellt. Hier sorgt die Antriebseinheit dafür, dass ein Schließkeilträger mit Hilfe des dortigen elektromotorischen Antriebes linear verschoben wird. Dazu arbeitet der Antrieb über einen Exzenter auf den fraglichen Schließkeilträger, an welchem seinerseits ein Schließkeil angebracht ist. Der Schließkeil wechselwirkt in bekannter Art und Weise mit einem Kraftfahrzeugtürschloss, welches seinerseits in oder an einer Kraftfahrzeugtür angebracht ist. Auf diese Weise kann eine motorische Schließhilfe realisiert werden. Auch in diesem Fall sind zusätzliche Führungen für den Schließkeilträger als gleichsam Betätigungsstange notwendig und ist zusätzlich eine den Schließkeilträger in Öffnungsrichtung mit Federkraft beaufschlagende Feder vorgesehen.

Aus der EP 2 163 715 A1 ist eine Antriebseinheit bekannt, bei der zusätzlich zu dem in die Antriebsausnehmung der Betätigungsstange eingreifenden Antriebsnocken des Antriebs ein an den Antrieb angeschlossenes Führungsmittel vorgesehen ist, welches mit einem Gegenführungsmittel an der Betätigungsstange zu ihrer Führung wechselwirkt.

Neben den beschriebenen Anwendungen einer solchen Antriebseinheit als gleichsam Öffnungs- oder Schließhilfe einer zugehörigen Kraftfahrzeugklappe, Kraftfahrzeughaube, Kraftfahrzeugseitentür etc. lassen sich solche Antriebseinheiten selbstverständlich auch anderweitig nutzen. Beispielsweise kann eine derartige Antriebseinheit auch im Zusammenhang mit einem Fensterheber, als Spiegelverstellung, Sitzverstellung etc. eingesetzt werden. Sämtlichen Anwendungsfällen ist gemein, dass der typischerweise mit einer im Kraftfahrzeug zur Verfügung stehenden Nieder-Gleichspannung von beispielsweise 12 V betriebene elektromotorische Antrieb hinsichtlich seiner Leistung begrenzt ist, sodass durch beispielsweise ein nachgeschaltetes Getriebe oder auch eine spezielle Auslegung der Betätigungsstange sowie des in die Antriebsausnehmung eingreifenden Antriebsnockens des Antriebes eine Steigerung des Drehmomentes erforderlich ist. Hierbei ist zu berücksichtigen, dass die Betätigungsstange zur einwandfreien Kraftübertragung mit Hilfe des Nockens an diesen per Federkraft angelegt werden muss und/oder zusätzliche Führungen für die Betätigungsstange erforderlich sind, wie dies der zuvor referierte Stand der Technik eindrucksvoll bestätigt. Das führt zu einem insgesamt nicht unerheblichen konstruktiven Aufwand, insbesondere was die Anbringung der zusätzlichen Feder und die ergänzende Berücksichtigung von Führungen angeht. Hier will die Erfindung insgesamt Abhilfe schaffen.

Der Erfindung liegt das technische Problem zugrunde, eine derartige Antriebseinheit für kraftfahrzeugtechnische Anwendungen so weiterzuentwickeln, dass der konstruktive Aufwand insgesamt verringert ist und folglich mit reduzierten Herstellungskosten gerechnet werden kann.

Zur Lösung dieser technischen Problemstellung dient eine Antriebseinheit für kraftfahrzeugtechnische Anwendungen gemäß Anspruch 1, wobei das Führungsmittel als Führungsnocken ausgebildet ist und es sich bei dem Gegenführungsmittel um eine Führungsausnehmung in der Betätigungsstange handelt, wobei das Zusammenspiel zwischen dem Führungsnocken und der Führungsausnehmung dafür sorgt, dass die Betätigungsstange größtenteils linear in einer Betätigungsrichtung beaufschlagt wird.

Das Führungsmittel und das Gegenführungsmittel sind dabei insgesamt so ausgelegt, dass beispielsweise eine ergänzende gehäuseseitige Führung der Betätigungsstange ebenso entbehrlich ist wie ein zusätzliches Federelement. Dabei ist in diesem Zusammenhang die Auslegung ferner so getroffen, dass das Führungsmittel an den Antrieb angeschlossen ist, während das Gegenführungsmittel eine Anbringung an der Betätigungsstange erfährt, sodass zusätzliche und beispielsweise in einem die Antriebseinheit aufnehmenden Gehäuse realisierte Gegenführungsmittel entfallen können. Das heißt, die zusätzlich vorgesehenen Führungsmittel und Gegenführungsmittel finden sich an den ohnehin vorhandenen und notwendigen Bestandteilen der Antriebseinheit, nämlich einerseits am Antrieb und andererseits an der Betätigungsstange. Meistens sind sowohl der Antriebsnocken des Antriebes als auch das zusätzliche Führungsmittel an einem ausgangsseitigen Zahnrad bzw. Antriebsrad des Antriebes realisiert. Das gilt selbstverständlich nur beispielhaft. Jedenfalls wird auf diese Weise der konstruktive Aufwand gegenüber bisherigen Ausführungsformen deutlich verringert, weil beispielsweise zusätzlich im Gehäuse der Antriebseinheit vorgesehene Führungen oder Gegenführungsmittel ebenso entbehrlich sind wie eine die Betätigungsstange beaufschlagende Feder.

Nach erfindungsgemäßer Ausgestaltung ist das Führungsmittel als Führungsnocken ausgebildet. Demzufolge handelt es sich bei dem Gegenführungsmittel erfindungsgemäß um eine Führungsausnehmung in der Betätigungsstange. Das heißt, die Betätigungsstange weist neben der Antriebsausnehmung zusätzlich und vorteilhaft die Führungsausnehmung auf. Während der Antriebsnocken des Antriebes in die Antriebsausnehmung der Betätigungsstange eingreift, wechselwirkt der ebenfalls an den Antrieb angeschlossene Führungsnocken demgegenüber mit der ergänzend in oder an der Betätigungsstange vorgesehenen Führungsausnehmung.

Der Antriebsnocken und der Führungsnocken sind im Allgemeinen fest miteinander verbunden. Außerdem hat es sich in diesem Zusammenhang bewährt, wenn der Antriebsnocken und der Führungsnocken achsgleich an den Antrieb angeschlossen sind. Das heißt, die beiden Nocken verfügen trotz ihres exzentrischen Charakters über eine jeweilige Achse, um welche sie mit Hilfe des Antriebes verschwenkt werden. Dabei fallen die beiden Achsen der zugehörigen Nocken ineinander, weil der Antriebsnocken und der Führungsnocken achsgleich an den Antrieb angeschlossen sind. Meistens stimmt die Achse des Antriebes mit der Achse der beiden Nocken überein.

Darüber hinaus ist die Auslegung vorteilhaft so getroffen, dass der Antriebsnocken und der Führungsnocken parallel zueinander verlaufen. Dadurch definiert der Antriebsnocken einerseits eine Antriebsebene. Der Führungsnocken definiert ebenfalls und andererseits eine Führungsebene. Weil sowohl der Antriebsnocken als auch der Führungsnocken parallel zueinander verlaufen und folgerichtig parallel zueinander angeordnet sind, gilt dies auch für die Antriebsebene und die Führungsebene, die beabstandet zueinander parallel ausgerichtet sind.

Darüber hinaus hat sich eine Ausgestaltung bewährt, bei welcher die beiden Nocken winklig, und insbesondere spitzwinklig zueinander angeordnet sind. Tatsächlich sind der Antriebsnocken und der Führungsnocken - wie bereits beschrieben - achsgleich an den Antrieb angeschlossen. Dadurch können die beiden Nocken zwischen sich unschwer einen spitzen Winkel einschließen. An dieser Stelle haben sich spitze Winkel im Bereich von ca. 10° bis 80° und vorzugsweise 20 ° bis 60 ° als besonders günstig erwiesen.

Der Antriebsnocken am Antrieb greift im Allgemeinen in die Antriebsausnehmung in der Betätigungsstange ein, wobei beide vorgenannten Elemente in der Antriebsebene liegen. Außerdem ist die Auslegung vorteilhaft so getroffen, dass der Führungsnocken in die Führungsausnehmung in der gegenüber der Antriebsebene beabstandeten Führungsebene eingreift. Die Antriebsebene und die Führungsebene verlaufen parallel zueinander mit Abstand.

Im Detail ist der Antriebsnocken im Allgemeinen elliptisch ausgebildet. Die Antriebsausnehmung verfügt über eine kreissegmentartige Gestalt, wie nachfolgend in der Figurenbeschreibung noch näher erläutert wird. Demgegenüber ist der Führungsnocken üblicherweise abgestumpft elliptisch ausgebildet. Die Führungsausnehmung verfügt über einen linsenförmigen Querschnitt.

Der meistens elliptisch ausgebildete Antriebsnocken und der abgestumpft elliptisch ausgelegte Führungsnocken sind nicht nur vorteilhaft achsgleich an den Antrieb angeschlossen, sondern stimmen auch größtenteils größenmäßig überein mit der Besonderheit, dass der elliptisch ausgelegte Antriebsnocken eine insgesamt geringfügig größere Länge im Vergleich zum abgestumpft elliptischen Führungsnocken aufweist.

Aufgrund der spitzwinkligen Anordnung der beiden Nocken zueinander, die darüber hinaus achsgleich an den Antrieb angeschlossen sind und folglich fest miteinander verbunden sind, wird auch eine entsprechende winklige Anordnung der zugehörigen Ausnehmungen beobachtet. Das heißt, die Führungsausnehmung für den Führungsnocken und die Antriebsausnehmung für den Antriebsnocken sind ebenfalls spitzwinklig zueinander orientiert. Das gilt zumindest dann, wenn man größtenteils eine jeweilige Symmetrieebene der Ausnehmung betrachtet und den von den jeweiligen Symmetrieebenen eingeschlossenen Winkel.

Im Ergebnis wird eine Antriebseinheit für kraftfahrzeugtechnische Anwendungen zur Verfügung gestellt und beschrieben, die keine zusätzlichen und externen Führungen beispielsweise in einem Gehäuse der Antriebseinheit benötigt. Auch eine ergänzende und im Stand der Technik obligatorische Feder ist entbehrlich. Gleichwohl ist die erfindungsgemäße Antriebseinheit in der Lage, beispielsweise eine Linearbewegung endseitig der Betätigungsstange und gegenüberliegend der Lagerung der Betätigungsstange am Antrieb zur Verfügung zu stellen.

Zugleich stellt der in die Antriebsausnehmung eingreifende Antriebsnocken eine gleichsam variable Übersetzung während der Betätigung zu Verfügung, sodass abtriebsseitig bzw. ausgangsseitig der Betätigungsstange beispielsweise ein ansteigendes Drehmoment zur Verfügung steht. Das alles gelingt unter Berücksichtigung eines besonders einfachen und kompakten Aufbaus, welcher auf diese Weise besondere Kostenvorteile ermöglicht. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine Draufsicht auf eine erfindungsgemäße Antriebseinheit für kraftfahrzeugtechnische Anwendungen,
- Fig. 2: die erfindungsgemäße Antriebseinheit für kraftfahrzeugtechnische Anwendungen in einer schematischen perspektivischen Darstellung und
- Figuren 3A und 3B: Detailansichten der in diesem Zusammenhang jeweils realisierten Nocken, nämlich des Antriebsnockens und des Führungsnockens.

In den Figuren ist eine Antriebseinheit für kraftfahrzeugtechnische Anwendungen bildlich dargestellt. Die wiedergegebene Antriebseinheit arbeitet im vorliegenden Fall und nicht einschränkend als Zuziehhilfe. Dazu ist zunächst einmal ein elektromotorischer Antrieb 1, 2 realisiert. Der elektromotorische Antrieb 1, 2 setzt sich aus einem Elektromotor 1 und einem mit einer Abtriebswelle des Elektromotors 1 kämmenden Antriebsrad 2 für eine Betätigungsstange 3 zusammen.

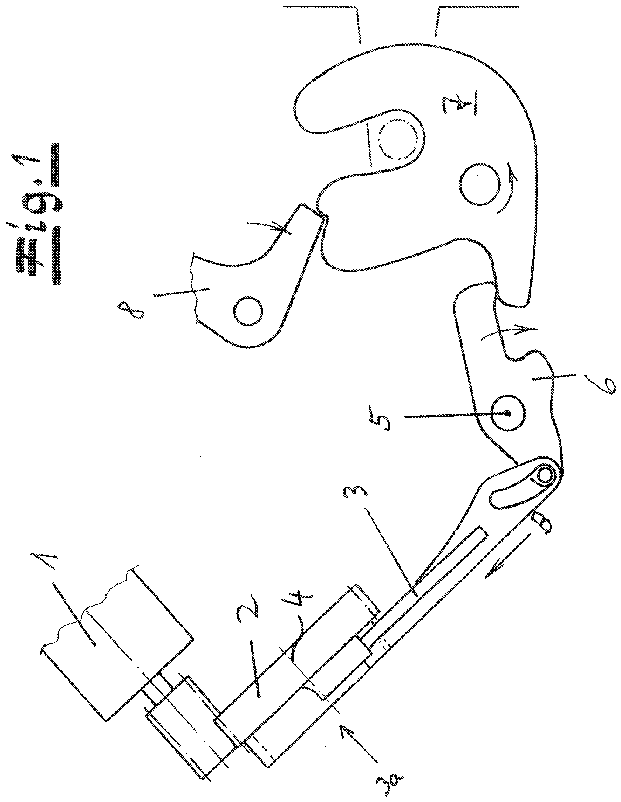

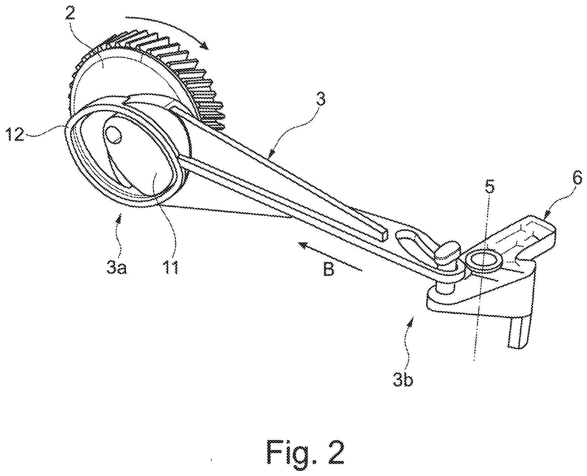

Die Betätigungsstange 3 ist mit ihrem einen (linken) Ende 3a an dem elektromotorischen Antrieb 1, 2 gelagert. Tatsächlich erkennt man in der Fig. 1 und 2 eine Achse 4 des Antriebes 1, 2, gegenüber welcher die Betätigungsstange 3 mit ihrem betreffenden Ende 3a drehbar an den Antrieb 1, 2 angeschlossen ist. Das andere gegenüberliegende Ende 3b der Betätigungsstange 3 arbeitet unter Zwischenschaltung eines um eine Achse 5 schwenkbaren Hebels 6 auf eine Drehfalle 7 als Bestandteil eines Gesperres 7, 8, welche durch eine in der Fig. 1 dargestellte Linearbewegung der Betätigungsstange 3 in einer angedeuteten Zuziehrichtung im Gegenuhrzeigersinn beaufschlagt wird. Zum Gesperre 7, 8 gehört noch eine angedeutete und mit der Drehfalle 7 in üblicher Weise wechselwirkende Sperrklinke 8.

Tatsächlich korrespondiert eine Beaufschlagung der Betätigungsstange 3 mit Hilfe des elektromotorischen Antriebes 1, 2 entsprechend der Darstellung in der Fig. 1 dazu, dass das Antriebsrad 2 im Uhrzeigersinn beaufschlagt wird, sodass als Folge hiervon die Betätigungsstange 3 im Ausführungsbeispiel nach links in ihrer eingezeichneten Betätigungsrichtung B beaufschlagt wird. Die Bewegung der Betätigungsstange 3 in ihrer Betätigungsrichtung B führt dazu, dass der Hebel 6 um seine Achse 5 ebenfalls im Uhrzeigersinn verschwenkt wird und hierbei die Drehfalle 7 im angedeuteten Gegenuhrzeigersinn zuzieht.

Wie bereits erläutert, ist die Betätigungsstange 3 mit ihrem einen Ende 3a am Antrieb 1, 2 gelagert, während das andere Ende 3b im Ausführungsbeispiel für das bereits beschriebene Zuziehen der Drehfalle 7 sorgt. Das gilt selbstverständlich nur beispielhaft und ist keineswegs zwingend. Zu diesem Zweck arbeitet der Antrieb 1, 2 exzentrisch auf die Betätigungsstange 3. Dazu greift ein Antriebsnocken 9 des Antriebes 1, 2 in eine Antriebsausnehmung 10 der Betätigungsstange 3 ein. Darüber hinaus ist erfindungsgemäß zusätzlich noch ein an den Antrieb 1, 2 angeschlossenes Führungsmittel 11 in Gestalt eines Führungsnockens 11 realisiert. Das Führungsmittel 11 wechselwirkt mit einem Gegenführungsmittel 12 an der Betätigungsstange 3 zur Führung der Betätigungsstange 3, wobei es sich bei dem Gegenführungsmittel 12 an der Betätigungsstange 3 nach dem Ausführungsbeispiel um eine zusätzliche Führungsausnehmung 12 in der Betätigungsstange 3 handelt.

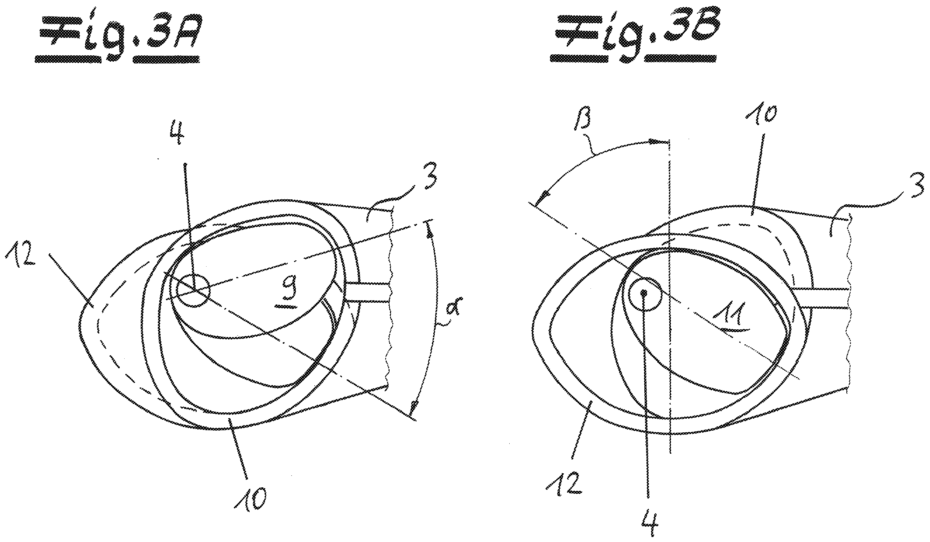

Der Antriebsnocken 9 und der Führungsnocken 11 sind fest miteinander verbunden. Außerdem verfügen die beiden Nocken 9, 11 über eine gemeinsame Achse 4, die zugleich mit der Achse 4 des Antriebes 1, 2 zusammenfällt, wie eine vergleichende Betrachtung der Figuren 2 und 3A sowie 3B deutlich macht. Der Antriebsnocken 9 und der Führungsnocken 11 verlaufen parallel zueinander. Auf diese Weise definiert der Antriebsnocken 9 eine Antriebsebene und der Führungsnocken 11 eine parallel zur Antriebsebene verlaufende und hierzu beabstandete Führungsebene. Nach dem Ausführungsbeispiel ist in der Ansicht nach der Fig. 2 die Führungsebene mit dem Führungsnocken 11, welcher in die Führungsausnehmung 12 eingreift, oberhalb der Antriebsebene angeordnet, die sich demgegenüber darunter und in der Darstellung nach der Fig. 2 verdeckt befindet. In der Antriebsebene sind der Antriebsnocken 9 und die zugehörige Antriebsausnehmung 10 platziert.

Anhand der vergrößerten Darstellung in den Figuren 3A und 3B erkennt man ferner, dass die beiden Nocken 9, 11 winklig und insbesondere spitzwinklig zueinander angeordnet sind. Tatsächlich ist zu diesem Zweck in der Fig. 2A ein Winkel α angedeutet, welcher von den beiden Nocken 9, 11 in Bezug auf die gemeinsame Achse 4 eingeschlossen wird. Dieser spitze Winkel α kann vorteilhaft Werte zwischen 20 ° und 60 ° einnehmen, beträgt im Ausführungsbeispiel ca. 50 °. In gleicher Weise sind auch die beiden Ausnehmungen 10, 12 winklig zueinander angeordnet.

Tatsächlich ist der Antriebsnocken 9 elliptisch ausgebildet, während der Führungsnocken 11 demgegenüber abgestumpft elliptisch ausgelegt ist. Der Antriebsnocken 9 und der Führungsnocken 11 verfügen jeweils über eine nahezu übereinstimmende Gestalt und in etwa deckungsgleiche Größe bis auf den Unterschied, dass der Führungsnocken 11 an seinem der Achse 4 gegenüberliegenden Ende abgestumpft ist. Die Antriebsausnehmung 10 ist ihrerseits kreissegmentartig ausgebildet, und zwar in Bezug auf die Achse 4. Die Führungsausnehmung 12 verfügt demgegenüber über eine linsenförmige Gestalt.

Anhand einer vergleichenden Betrachtung der Figuren 3A und 3B erkennt man, dass die beiden Ausnehmungen 10, 12 ebenfalls spitzwinklig zueinander angeordnet und orientiert sind. Das ergibt sich, wenn man entsprechend der Darstellung in der Fig. 3B hier jeweils eingezeichnete Symmetrieachsen und den von den Symmetrieachsen eingeschlossenen Winkel β betrachtet. Tatsächlich wird an dieser Stelle ein spitzer Winkel β von in etwa 20 ° bis 60 ° beobachtet. Vorliegend liegt der Winkel β ebenfalls bei 50 ° und stimmt größenmäßig mit dem spitzen Winkel α zwischen den beiden Führungsnocken 9, 11 überein.

Die beiden Ausnehmungen 10, 12 sind in den unterschiedlichen Ebenen, nämlich der Führungsebene und der Antriebsebene größtenteils mit Überdeckung unter Berücksichtigung des zuvor bereits angesprochenen spitzen Winkels α am Ende 3a der Betätigungsstange 3 an bzw. in dieser vorgesehen und ausgeprägt. Die beiden Nocken 9, 11 sind demgegenüber achsgleich und fest miteinander verbunden an den elektromotorischen Antrieb 1, 2 bzw. das Antriebsrad 2 angeschlossen.

Sobald nun der elektromotorische Antrieb 1, 2 beaufschlagt wird und beispielsweise die in der Fig. 2 angedeutete Uhrzeigersinnbewegung des Antriebsrades 2 vollführt, sorgen die beiden Nocken 9, 11 dafür, dass die Betätigungsstange 3 mit durch die Form des Antriebsnockens 9 vorgegebener wachsender Übersetzung beaufschlagt wird, die dann ausgangsseitig als entsprechend ansteigende Kraft am anderen Ende 3b der Betätigungsstange 3 zur Verfügung steht. Das Zusammenspiel zwischen dem Führungsnocken 11 und der Führungsausnehmung 12 sorgt parallel dafür, dass hierbei die Betätigungsstange 3 größtenteils linear in der Betätigungsrichtung B beaufschlagt wird, und zwar ohne dass zusätzlich externe Führungsmittel in einem nicht dargestellten Gehäuse der erfindungsgemäßen Antriebseinheit erforderlich wären. Zugleich sorgt das beschriebene Wechselspiel zwischen dem Führungsnocken 11 und der Führungsausnehmung 12 dafür, dass eine die Betätigungsstange 3 beaufschlagende Feder entbehrlich ist und die Betätigungsstange 3 nach Absolvieren eines Betätigungsweges in der Betätigungsrichtung B ohne zusätzliche Federbeaufschlagung zurückgestellt werden kann.

### Bezugszeichenliste:

- 1: Elektromotor
- 1, 2: elektromotorischer Antrieb
- 2: Antriebsrad
- 3: Betätigungsstange
- 3a: Ende
- 3b: Ende
- 4: Achse
- 5: Achse
- 6: Hebel
- 7: Drehfalle
- 7, 8: Gesperre
- 8: Sperrklinke
- 9: Antriebsnocken
- 10: Antriebsausnehmung
- 11: Führungsmittel (Führungsnocken)
- 12: Gegenführungsmittel (Führungsausnehmung)
- B: Betätigungsrichtung
- α: Winkel
- β: Winkel

## Patentansprüche

1. Antriebseinheit für kraftfahrzeugtechnische Anwendungen, mit einem elektromotorischen Antrieb (1, 2), und mit einer an einem Ende (3a) an dem Antrieb (1, 2) gelagerten und von ihm beaufschlagten Betätigungsstange (3), wobei der Antrieb (1, 2) exzentrisch auf die Betätigungsstange (3) arbeitet und dazu ein Antriebsnocken (9) des Antriebes (1, 2) in eine Antriebsausnehmung (10) der Betätigungsstange (3) eingreift, wobei zusätzlich ein an den Antrieb (1, 2) angeschlossenes Führungsmittel (11) vorgesehen ist, welches mit einem Gegenführungsmittel (12) an der Betätigungsstange (3) zu ihrer Führung wechselwirkt, wobei das Führungsmittel (11) als Führungsnocken (11) ausgebildet ist und es sich bei dem Gegenführungsmittel (12) um eine Führungsausnehmung (12) in der Betätigungsstange (3) handelt, wobei das Zusammenspiel zwischen dem Führungsnocken (11) und der Führungsausnehmung (12) dafür sorgt, dass die Betätigungsstange (3) größtenteils linear in einer Betätigungsrichtung (B) beaufschlagt wird.

2. Antriebseinheit nach Anspruch 1, **dadurch gekennzeichnet, dass** der Antriebsnocken (9) und der Führungsnocken (11) fest miteinander verbunden sind.

3. Antriebseinheit nach einem der Ansprüche 1 bis 2, **dadurch gekennzeichnet, dass** der Antriebsnocken (9) und der Führungsnocken (11) achsgleich an den Antrieb (1, 2) angeschlossen sind.

4. Antriebseinheit nach einem der Ansprüche 1 bis 3, **dadurch gekennzeichnet, dass** der Antriebsnocken (9) und der Führungsnocken (11) parallel zueinander verlaufen und einerseits eine Antriebsebene sowie andererseits eine Führungsebene definieren.

5. Antriebseinheit nach einem der Ansprüche 1 bis 4, **dadurch gekennzeichnet, dass** der Antriebsnocken (9) und der Führungsnocken (11) winklig, insbesondere spitzwinklig, zueinander angeordnet sind.

6. Antriebseinheit nach einem der Ansprüche 4 bis 5, **dadurch gekennzeichnet, dass** der Antriebsnocken (9) in die Antriebsausnehmung (10) in der Antriebsebene eingreift und der Führungsnocken (11) in die Führungsausnehmung (12) in der gegenüber der Antriebsebene beabstandeten Führungsebene.

7. Antriebseinheit nach einem der Ansprüche 1 bis 6, **dadurch gekennzeichnet, dass** der Antriebsnocken (9) elliptisch und die Antriebsausnehmung (10) kreissegmentartig ausgebildet sind.

8. Antriebseinheit nach einem der Ansprüche 1 bis 7, **dadurch gekennzeichnet, dass** der Führungsnocken (11) abgestumpft elliptisch und die Führungsausnehmung (12) linsenförmig ausgelegt sind.

## Claims

1. A drive unit for motor vehicle applications, with an electric motor drive (1, 2), and with an actuating rod (3) mounted at one end (3a) on the drive (1, 2) and acted upon by it, wherein the drive (1, 2) operates eccentrically on the actuating rod (3) and for this purpose a drive cam (9) of the drive (1, 2) engages in a drive recess (10) of the actuating rod (3), wherein a guide means (11) connected to the drive (1, 2) is additionally provided, which interacts with a counter-guide means (12) on the actuating rod (3) to guide it, wherein the guide means (11) is designed as a guide cam (11) and the counter-guide means (12) is a guide recess (12) in the actuating rod (3), wherein the interaction between the guide cam (11) and the guide recess (12) ensures that the actuating rod (3) is acted upon largely linearly in an actuating direction (B).

2. The drive unit according to claim 1, **characterized in that** the drive cam (9) and the guide cam (11) are fixedly connected to one another.

3. The drive unit according to any of claims 1 to 2, **characterized in that** the drive cam (9) and the guide cam (11) are connected to the drive (1, 2) with the same axis.

4. The drive unit according to any of claims 1 to 3, **characterized in that** the drive cam (9) and the guide cam (11) run parallel to one another and define a drive plane on the one hand and a guide plane on the other hand.

5. The drive unit according to one of claims 1 to 4, **characterized in that** the drive cam (9) and the guide cam (11) are arranged at an angle to one another, in particular at an acute angle.

6. The drive unit according to any of claims 4 to 5, **characterized in that** the drive cam (9) engages in the drive recess (10) in the drive plane and the guide cam (11) engages in the guide recess (12) in the guide plane spaced apart from the drive plane.

7. The drive unit according to any of claims 1 to 6, **characterized in that** the drive cam (9) is elliptical and the drive recess (10) is circular segment-shaped.

8. The drive unit according to any of claims 1 to 7, **characterized in that** the guide cam (11) is truncated elliptical and the guide recess (12) is lenticular.

## Revendications

1. Unité d'entraînement pour des applications dans le domaine technique des véhicules automobiles, comportant un entraînement (1, 2) à moteur électrique, et comportant une tige d'actionnement (3) montée à une extrémité (3a) sur l'entraînement (1, 2) et sollicitée par celui-ci, dans laquelle l'entraînement (1, 2) travaille de manière excentrée sur la tige d'actionnement (3) et une came d'entraînement (9) de l'entraînement (1, 2) vient en prise dans un évidement d'entraînement (10) de la tige d'actionnement (3), dans laquelle un moyen de guidage (11) raccordé à l'entraînement (1, 2) est en outre prévu, lequel moyen de guidage interagit avec un contre-moyen de guidage (12) au niveau de la tige d'actionnement (3) pour son guidage, dans laquelle le moyen de guidage (11) est réalisé en tant que came de guidage (11) et le contre-moyen de guidage (12) est un évidement de guidage (12) dans la tige d'actionnement (3), dans laquelle la coopération entre la came de guidage (11) et l'évidement de guidage (12) permet à la tige d'actionnement (3) d'être sollicitée de manière largement linéaire dans un sens d'actionnement (B).

2. Unité d'entraînement selon la revendication 1, **caractérisée en ce que** la came d'entraînement (9) et la came de guidage (11) sont reliées de manière fixe l'une à l'autre.

3. Unité d'entraînement selon l'une des revendications 1 à 2,
**caractérisée en ce que** la came d'entraînement (9) et la came de guidage (11) sont raccordées à l'entraînement (1, 2) sur un même axe.

4. Unité d'entraînement selon l'une des revendications 1 à 3,
**caractérisée en ce que** la came d'entraînement (9) et la came de guidage (11) s'étendent parallèlement l'une à l'autre et définissent d'une part un plan d'entraînement et d'autre part un plan de guidage.

5. Unité d'entraînement selon l'une des revendications 1 à 4,
**caractérisée en ce que** la came d'entraînement (9) et la came de guidage (11) sont disposées selon un angle l'une par rapport à l'autre, en particulier selon un angle aigu.

6. Unité d'entraînement selon l'une des revendications 4 à 5,
**caractérisée en ce que** la came d'entraînement (9) vient en prise dans l'évidement d'entraînement (10) dans le plan d'entraînement et la came de guidage (11) vient en prise dans l'évidement de guidage (12) dans le plan de guidage espacé du plan d'entraînement.

7. Unité d'entraînement selon l'une des revendications 1 à 6,
**caractérisée en ce que** la came d'entraînement (9) est réalisée sous forme elliptique et l'évidement d'entraînement (10) est réalisé à la manière d'un segment de cercle.

8. Unité d'entraînement selon l'une des revendications 1 à 7,
**caractérisée en ce que** la came de guidage (11) est conçue sous forme elliptique tronquée et l'évidement de guidage (12) est conçu sous forme lenticulaire.
